# EUROPÄISCHE PATENTSCHRIFT

(11) **EP 3 300 793 B1**
(45) Veröffentlichungstag und Bekanntmachung des Hinweises auf die Patenterteilung: **31.03.2021**
(21) Anmeldenummer: 17188675.7
(22) Anmeldetag: 31.08.2017
(51) Int. Cl.: B01F 3/12, B01F 5/22, B01F 7/00, B01F 7/18

(54) **VORRICHTUNG ZUM MISCHEN EINES PULVERFÖRMIGEN GUTS MIT EINER FLÜSSIGKEIT**
DEVICE FOR MIXING A POWDERY MATERIAL WITH A LIQUID
DISPOSITIF DE MÉLANGE D'UN ARTICLE EN POUDRE AVEC UN LIQUIDE

(30) Priorität: 30.09.2016 DE 102016118575
(43) Veröffentlichungstag der Anmeldung: 04.04.2018
(73) Patentinhaber: Zeppelin Systems GmbH, 88045 Friedrichshafen (DE)
(72) Erfinder: Jakob, Ulrich, 64319 Pfungstadt (DE); Hofmann, Andreas, 60438 Frankfurt/Main (DE)
(74) Vertreter: Keil & Schaafhausen Patentanwälte PartGmbB

(56) Entgegenhaltungen:
- CH-A5- 581 496
- DD-A1- 229 612
- DE-A1-102009 029 935
- US-A- 3 807 702
- US-A- 4 205 920
- US-B1- 7 222 725

## Beschreibung

Die Erfindung betrifft eine Vorrichtung zum Mischen eines pulverförmigen Guts mit einer Flüssigkeit, wobei die Vorrichtung ein Gehäuse aufweist, in dem ein Arbeitsraum mit einer Innenwand angeordnet ist, wobei in dem Arbeitsraum ein drehbar angetriebener Rotor angeordnet ist, der einen Flügelkranz und in Richtung auf die Innenwand weisende und in Umfangsrichtung des Rotors an unterschiedlichen Positionen angeordnete Stäbe aufweist, wobei oberhalb des Flügelkranzes eine Speiseöffnung für das pulverförmige Gut und unterhalb des Flügelkranzes ein mit einer Flüssigkeitsversorgungsanordnung verbindbarer Ringspalt angeordnet ist.

Eine derartige Vorrichtung entsprechend dem Oberbegriff des Anspruchs 1 ist beispielsweise aus DE 10 2009 029 935 B4 bekannt. Diese Vorrichtung dient zum Befeuchten von Mehl. Das durch die Speiseöffnung eingetragene Mehl wird zunächst durch eine Schlägerblechanordnung verteilt und dann dem Flügelkranz zugeführt. Der Flügelkranz weist Flügel mit geknickten Flächen auf, so dass sich zwischen benachbarten Flügeln eine Verengung bildet, so dass das Luft-Mehl-Gemisch nach dem Durchtritt durch die Verengung expandieren kann und dadurch fein durchmischt und äußerst homogen wird. Dieses Luft-Mehl-Gemisch wird dann befeuchtet und durch eine Anordnung von Scherstäben geleitet, die möglicherweise auftretende Konglomerate des Mehls wieder zerschlagen. Im Endergebnis erhält man ein befeuchtetes Mehl, das keinen Feinstaub mehr ausbildet.

DD 2 29 612 A1 zeigt eine Vorrichtung zur kontinuierlichen, gleichmäßigen Befeuchtung von rieselfähigem Gut. In einem einen Arbeitsraum bildenden Fallschacht ist ein Rotor in Form eines zylinderförmigen Körpers angeordnet. Der Körper weißt Schikanen auf, die als radial angeordnete Bolzen mit kreisförmigen Querschnitt ausgeführt sein können. Oberhalb des zylinderförmigen Körpers ist ein Kegel angeordnet, von dem in den Arbeitsraum fallendes Gut in tangentialer Richtung abgeschleudert wird, um einen Schleier zu bilden. Durch einen Fliegkraftzerstäuber wird eine Flüssigkeit fein zerstäubt und in den Schleier hineingesprüht, wobei der Schleier verhindert, dass das Wasser bis an die Wandung des Fallschachts gelangen kann.

CH 581 496 A5 zeigt eine Einrichtung zum kontinuierlichen Mischen von körnigem Material mit einer Kammer, die von einem Mantel umgeben ist. An der Innenseite des Mantels werden elastische Mischelemente entlanggeführt. Zum Mischen des Guts wird durch eine Zuführung auf einen Schleuderteller geleitet und von dort tangential nach außen abgeschleudert. Durch eine weitere Zufuhr wird eine erste Komponente eines Bindemittels zugeführt und ebenfalls tangential nach außen abgeschleudert. Die Mischelemente weisen in axialer Richtung des Rotors einen Abstand auf.

US 4 205 920 A beschreibt eine Vorrichtung zum kontinuierlichen Mischen von Sand und Bindemittel für die Gießerei. In einem Gehäuse mit kreisförmigen Querschnitt ist ein Rotor angeordnet. Der Rotor weist Rotorblätter aus elastischem Material auf, die an der Innenwand des Gehäuses entlang streifen.

Der Erfindung liegt die Aufgabe zugrunde, den Einsatzzweck einer derartigen Vorrichtung zu erweitern.

Diese Aufgabe wird bei einer Vorrichtung der eingangs genannten Art dadurch gelöst, dass die Stäbe parallel zur Axialrichtung des Rotors aneinander anschließen oder einander überlappen, wobei sich eine lückenlose Anordnung der Stäbe in Axialrichtung ergibt.

Der Rotor dreht sich mit einer relativ hohen Drehzahl von mehreren 100 Umdrehungen pro Minute. In einer bevorzugten Ausgestaltung dreht sich der Rotor mit 1000 bis 1500 Umdrehungen pro Minute. Dies führt im Zusammenhang damit, dass die Stäbe in Axialrichtung des Rotors aneinander anschließen oder einander überlappen, dazu, dass es in der Bewegungsrichtung des pulverförmigen Guts praktisch keinen Bereich in Axialrichtung gibt, in dem das pulverförmige Gut nicht von den Stäben beaufschlagt wird. Das pulverförmige Gut wird also sehr weitgehend durch die Stäbe beaufschlagt, so dass sich praktisch keine Agglomerate des pulverförmigen Gutes ausbilden können. Dies gilt auch und besonders dann, wenn dieses pulverförmige Gut dann mit der aus dem Ringspalt unter Zentrifugalkraft austretenden Flüssigkeit durchmischt wird. Es ergibt sich dann zwar eine Mischung aus der Flüssigkeit und dem pulverförmigen Gut, die auch zu einer teigartigen Masse führen kann. Aufgrund der lückenlosen Anordnung der Stäbe in Axialrichtung ergeben sich aber auch in dieser teigartigen Masse keine Agglomerate.

Vorzugsweise weisen in Axialrichtung benachbarte Stäbe in Umfangsrichtung jeweils einen Winkelabstand zwischen sich auf, wobei sich ein erster Winkelabstand von einem benachbarten zweiten Winkelabstand unterscheidet. Die Stäbe sind in Umfangsrichtung "chaotisch" verteilt, d.h. man hat, wenn man die Stäbe in Umfangsrichtung mit einer ersten Nummerierung versieht und in Axialrichtung mit einer zweiten Nummerierung versieht, keine Übereinstimmung der beiden Nummerierungen. Dadurch kann man vermeiden, dass sich ein Stab im "Windschatten" eines anderen Stabes bewegt, so dass das pulverförmige Gut sich auch nicht im Windschatten eines Stabes ansammeln und Agglomerate ausbilden kann.

Hierbei ist bevorzugt, dass ein erster Winkelabstand positiv und ein zweiter Winkelabstand negativ ist. Die Stäbe weisen also in Umfangsrichtung eine Anordnung relativ zueinander auf, bei der sich zwischen in Axialrichtung benachbarten Stäben ein relativ großer Winkelabstand ergeben kann. Dies muss allerdings nicht bei allen Stäben der Fall sein. Es reicht aber aus, wenn bei einem Großteil der Stäbe eine entsprechende Winkelabstandsverteilung vorhanden ist.

Vorzugsweise sind die Stäbe ausschließlich auf der von der Speiseöffnung abgewandten Seite des Flügelkranzes angeordnet. Die Vorrichtung ist vorzugsweise in einer in Schwerkraftrichtung verlaufenden Ausrichtung angeordnet, d.h. die Rotationsachse des Rotors verläuft in Schwerkraftrichtung und auch die Innenwand des Arbeitsraums verläuft in Schwerkraftrichtung. Kleinere Abweichungen von der Schwerkraftrichtung sind möglich. Wenn das pulverförmige Gut durch die Speiseöffnung zugeführt wird, dann wird es nicht durch Stäbe gestört sondern gelangt auf den Flügelkranz, wo es durch die Zentrifugalkraft nach außen geschleudert wird. Es rutscht dann unter Wirkung der Schwerkraft an der Innenwand des Arbeitsraumes herunter und kommt dann in Kontakt mit der zugeführten Flüssigkeit. In diesem Bereich treten dann die Stäbe in Aktion und können das pulverförmige Gut mit der Flüssigkeit vermischen.

Vorzugsweise sind die Stäbe in Axialrichtung beidseits des Ringspalts angeordnet. Hierbei trägt man der Tatsache Rechnung, dass eine Flüssigkeit, die aus dem Ringspalt austritt, auch entgegen der Schwerkraftrichtung nach oben geschleudert werden kann, wenn die Flüssigkeit beispielsweise auf einen Stab trifft. Die Benetzung des an der Innenwand befindlichen Gutes erfolgt also in Schwerkraftrichtung auch oberhalb des Ringspalts, so dass bereits hier Stäbe vorgesehen sind, um die Durchmischung zu bewirken. Die Anzahl der Sätze auf beiden Seiten des Ringspalts kann beliebig gewählt werden.

Vorzugsweise ist zwischen dem radial äußeren Ende der Stäbe und der Innenwand ein kleiner Abstand ausgebildet. Dieser Abstand richtet sich nach dem zu durchmischenden pulverförmigen Gut und der Flüssigkeit. Er ist so gewählt, dass ein sich durch die Mischung von Flüssigkeit und pulverförmigem Gut ausbildender Teig sich austauscht. Bei dem kleinen Abstand wird der Teig geschert und verarbeitet und löst sich dadurch von der Innenwand des Gehäuses ab. Durch den kleinen Abstand wird eine Scherkraft erzeugt, wenn sich die Stäbe an der Innenwand vorbeibewegen. Diese Scherkraft pflanzt sich durch den Abstand hindurch bis zur Innenwand des Arbeitsraumes fort, so dass der gesamte Teig geknetet wird. Ein vorzugsweise verwendeter Abstand liegt im Bereich von 1 bis 5mm, besonders vorzugsweise von 1 bis 2mm.

Bevorzugterweise weist der Flügelkranz Flügel auf, die zumindest an ihrer radialen Außenseite einen Winkel im Bereich von 0° bis 8° mit der Umfangsrichtung einschließen. Der Winkel ist also relativ klein. Damit erzeugt der Flügelkranz auch nur eine relativ schwache Luftströmung von der Speiseöffnung in Richtung auf die Stäbe. Eine derartige kleine Luftströmung reicht aber für die Förderung des pulverförmigen Gutes ohne weiteres aus, weil dieses pulverförmige Gut ohnehin hauptsächlich durch die Schwerkraft gefördert wird. Wie oben erwähnt, wird das pulverförmige Gut beim Auftreffen auf die rotierenden Flügel durch die Zentrifugalkraft radial nach außen an die Innenwand des Arbeitsraums geschleudert.

Vorzugsweise weisen die Flügel eine Verwindung um eine von radial innen nach radial außen verlaufende Achse auf. Die Flügel sind also nicht über ihre gesamte radiale Erstreckung gleichmäßig zur Umfangsrichtung geneigt. Vielmehr sind sie vorzugsweise in sich verwunden. Dies erleichtert die Fertigung.

Bevorzugterweise weist das Gehäuse am unteren Ende des Arbeitsraums einen Auslass auf, wobei eine dem Auslass benachbarte Unterkante eines dem Auslass benachbarten Stabe mit der Unterkante des Arbeitsraumes fluchtet, und ein Auslassabschnitt an den Auslass anschließt. Der dem Auslass benachbarte Stab streift also den sich an der Innenwand bildenden Teig oder die Mischung in jedem Fall ab, so dass sich hier kein Teig- oder Mischungsring bilden kann, der den weiteren Abtransport des sich oberhalb des Auslasses bildenden Teiges oder der Mischung erschweren oder sogar verhindern könnte. Durch den Auslassabschnitt kann dann der Teig oder das mit Flüssigkeit durchmischte Gut an eine andere Position verbracht werden, beispielsweise auf ein Förderband oder dergleichen, mit dem es zu einer Verwendungsstelle transportiert werden kann.

Vorzugsweise weist der Auslassabschnitt gegenüber der Auslassöffnung einen radialen Rücksprung nach außen auf. Der durch den dem Auslass benachbarten Stab abgestreifte Teig kann sich also auch unterhalb der Auslassöffnung ansammeln. Wenn der Teig an einer Wand anhaftet, wird er unterhalb der Auslassöffnung an einer Wand anhaften, die eine in Schwerkraftrichtung weisende Flächenkomponente aufweist, d.h. senkrecht zur Schwerkraftrichtung steht. Von einem derartigen Wandabschnitt kann der Teig dann unter der Wirkung der Schwerkraftrichtung herunterfallen. Das gleiche gilt hier und im Folgenden auch dann, wenn sich kein Teig ausbildet, sondern das pulverförmige Gut mit der Flüssigkeit nur gemischt ist.

Bevorzugterweise entspricht der radiale Rücksprung mindestens der Dicke einer Wand des Gehäuses, die den Arbeitsraum umgibt. Der Auslassabschnitt kann also relativ einfach durch einen Schlauch oder einen Ringkanal gebildet sein, der sich außen an das Gehäuse anschließt. Ein derartiger Rücksprung reicht in der Regel aus, um ein Herabfallen des Teiges zu bewirken.

Vorzugsweise ist der Auslassabschnitt aus einem elastischen Material gebildet. Das elastische Material ist also verformbar. Wenn der Teig von dem dem Auslass benachbarten Stab abgestreift wird und sich durch irgendwelche Effekte dennoch ein Ansammeln des Teiges oder des durchmischten pulverförmigen Gutes an der Innenwand des Auslasskanals ergeben sollte, dann führt eine derartige Ansammlung dazu, dass sich der Auslassabschnitt radial aufweitet, so dass sich hier wiederum ein Wandabschnitt ergibt, der senkrecht auf der Schwerkraftrichtung steht oder zumindest eine Komponente senkrecht zur Schwerkraftrichtung hat. Von einem derartigen Wandabschnitt fällt dann der Teig oder das durchmischte pulverförmige Gut nach unten.

Alternativ oder zusätzlich dazu kann vorgesehen sein, dass sich der Auslassabschnitt von der Auslassöffnung weg aufweitet. Eine derartige Aufweitung kann beispielsweise trichterförmig ausgebildet sein. Auch hier ist dann zu beobachten, dass sich ein Teig oder ein mit Flüssigkeit durchmischtes Gut zwar ansammeln kann. Bei Erreichen einer gewissen Größe fällt dann eine derartige Ansammlung aber nach unten.

Zusätzlich oder alternativ kann vorgegeben sein, dass der Auslassabschnitt eine Antihaft-Oberfläche aufweist. Diese Antihaft-Oberfläche kann durch das Material erzeugt werden, aus dem der Auslassabschnitt gebildet ist. Man kann auch zusätzlich oder alternativ eine Antihaft-Beschichtung verwenden, so dass der Teig oder das mit Flüssigkeit gemischte pulverförmige Gut nicht oder nur mit geringen Haltekräften an dem Auslassabschnitt anhaften kann.

Vorzugsweise weist das Gehäuse und/oder der Rotor eine Heizeinrichtung auf. Dies ist insbesondere dann von Vorteil, wenn als Flüssigkeit nicht Wasser, sondern beispielsweise Öl oder ein anderes Fett verwendet wird. In diesem Fall kann man die Viskosität der Flüssigkeit durch eine Beheizung herabsetzen.

Die Erfindung wird im Folgenden anhand eines bevorzugten Ausführungsbeispiels in Verbindung mit der Zeichnung beschrieben. Hierin zeigen:
- Fig. 1: einen vertikalen Längsschnitt durch eine Vorrichtung zum Mischen eines pulverförmigen Guts mit einer Flüssigkeit,
- Fig. 2: eine vergrößerte Einzelheit C aus Fig. 1 und
- Fig. 3: einen Schnitt B-B nach Fig. 1.

Eine Vorrichtung 1 zum Mischen eines pulverförmigen Guts mit einer Flüssigkeit weist ein Gehäuse 2 auf, in dem ein Arbeitsraum 3 angeordnet ist. Der Arbeitsraum 3 weist eine Innenwand 4 auf. Die Innenwand 4 ist gleichzeitig die innere Wand des Gehäuses 2.

Der Arbeitsraum 3 ist als Hohlzylinder mit einem kreisförmigen Querschnitt ausgestaltet. In dem Arbeitsraum 3 ist ein drehbar angetriebener Rotor 5 angeordnet. Der Rotor 5 wird durch einen Motor 6 angetrieben, der oberhalb des Gehäuses 2 angeordnet ist.

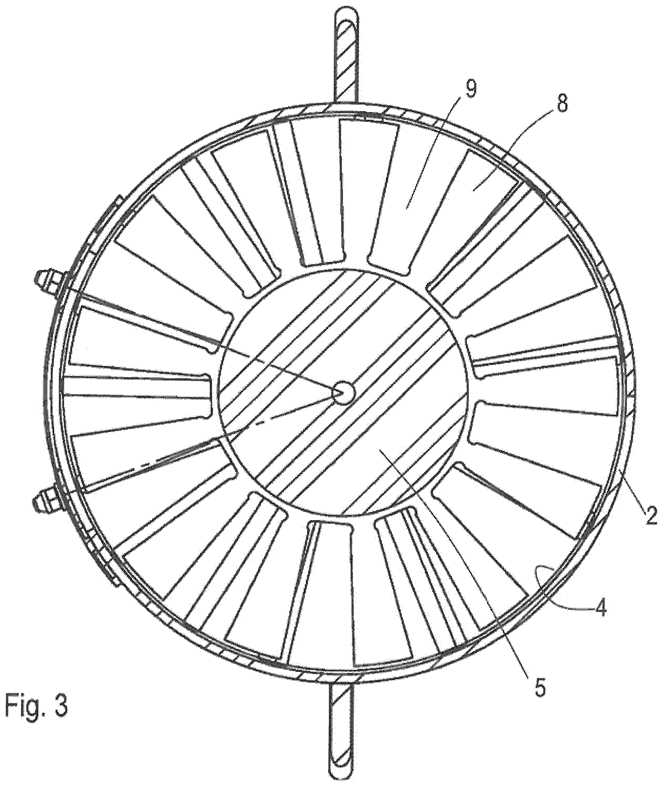

Der Rotor 5 weist einen Flügelkranz 7 auf. Der Flügelkranz 7 weist eine Vielzahl von in Umfangsrichtung verteilter Flügel 8 auf (Fig. 3). Die Flügel 8 schließen zumindest an ihrer radialen Außenseite einen Winkel im Bereich von 2° bis 8° mit der Umfangsrichtung ein. Diese Neigung wird dadurch erreicht, dass die Flügel 8 eine Verwindung um eine von radial innen nach radial außen verlaufende Achse aufweisen. Radial innen können die Flügel 8 parallel zur Umfangsrichtung ausgerichtet sein. Da der Neigungswinkel sehr klein ist, ist er in der Zeichnung nicht erkennbar. Zwischen den Flügeln 8 sind Lücken 9 vorgesehen.

Wenn die Flügel 8 an ihrer radialen Außenseite gegenüber der Umfangsrichtung geneigt sind, ist diese Neigung so gewählt, dass sich bei einer Rotation des Rotors 5 um seine Rotorachse 10 ein kleiner Luftstrom in Richtung von einer Speiseöffnung 11, in die das pulverförmige Gut eingeführt werden kann, zu einem Auslass 12 ergibt, an dem das mit der Flüssigkeit gemischte pulverförmige Gut aus dem Gehäuse 2 austritt. Die Rotationsachse ist vertikal ausgerichtet, d.h. parallel zur Schwerkraftrichtung. Gewisse Abweichungen von der Schwerkraftrichtung sind möglich, solange die Schwerkraft ausreicht, um das pulverförmige Gut und später das mit der Flüssigkeit gemischte pulverförmige Gut von der Speiseöffnung 11 zum Auslass 12 zu fördern.

Der Rotor 5 weist auf der von der Speiseöffnung 11 abgewandten Seite des Flügelkranzes 7 einen Ringspalt 13 auf, der mit einer Flüssigkeitsversorgungseinrichtung 14 über einen Kanal 15 in Verbindung steht.

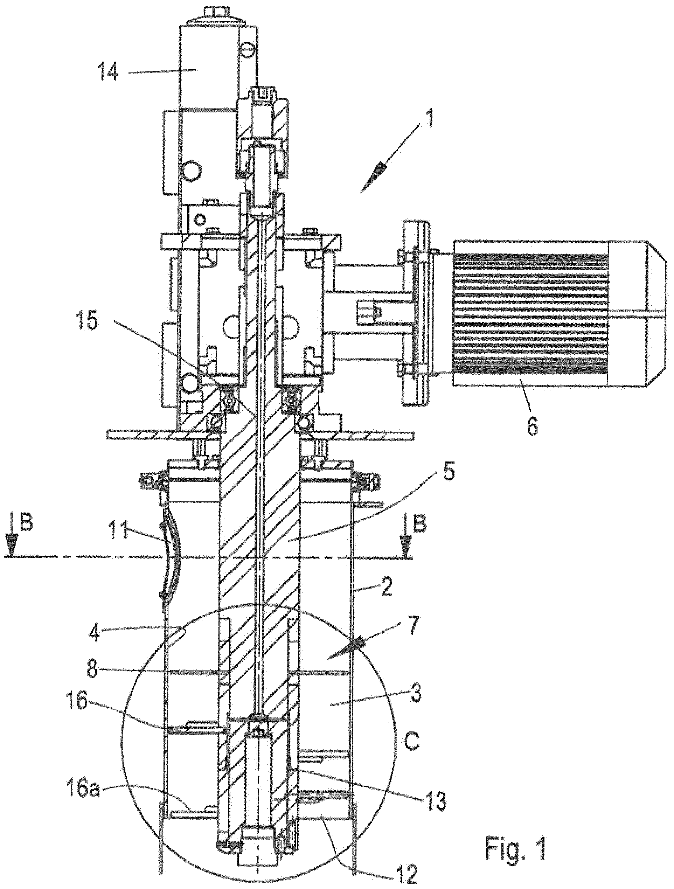

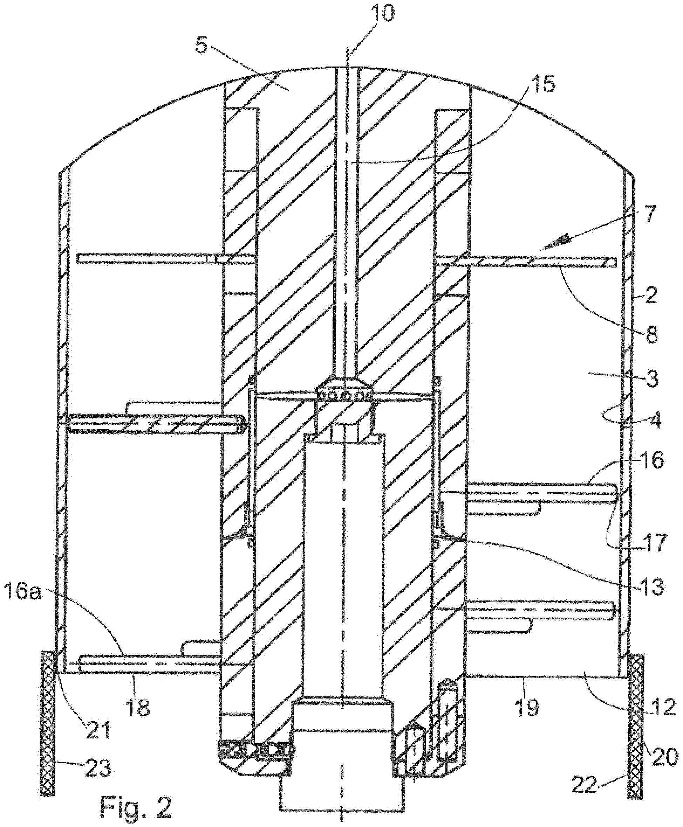

Ferner weist der Rotor 5 auf der von der Speiseöffnung 11 abgewandten Seite des Flügelkranzes 7 Stäbe 16 auf, die in Umfangsrichtung des Rotors 5 an unterschiedlichen Positionen angeordnet sind. Wie man in Fig. 1 und 2 erkennen kann, überlappen sich die Stäbe 16 in Axialrichtung des Rotors 5 etwas. Es würde allerdings auch ausreichen, wenn die Stäbe 16 in Axialrichtung des Rotors aneinander anschließen. Die Wirkung dieser Anordnung ist, dass die Innenwand 4 im Bereich der Stäbe 16 bei einer Umdrehung des Rotors 5 an jeder axialen Position einmal von einem Stab 16 überstrichen wird. Wie weiter unten erläutert werden wird, kann sich dadurch kein verbleibender Ring des durch die Speiseöffnung 11 zugeführten pulverförmigen Guts ergeben. An allen Positionen wird das pulverförmige Gut, das beim Auftreffen auf die Flügel 8 des Flügelkranzes 7 radial nach außen gegen die Innenwand 4 geschleudert wird, durch die Stäbe 16 von der Innenwand 4 abgestreift, oder zumindest beaufschlagt.

Die Stäbe 16 sind in Axialrichtung beidseits des Ringspalts 13 angeordnet. Die Anzahl der Stäbe 16 auf jeder Seite des Ringspalts 13 kann praktisch beliebig gewählt werden. Wenn Flüssigkeit aus dem Ringspalt 13 austritt und durch die Zentrifugalkraft radial nach außen gefördert wird, dann trifft diese Flüssigkeit auch auf Stäbe 16. Beim Auftreffen auf diese Stäbe 16 wird dann eine Richtungsänderung erfolgen, die die Flüssigkeit auch gegen die Richtung der Schwerkraft in einen Bereich an der Innenwand 4 des Arbeitsraums 3 oberhalb des Ringspalts 13 gelangen lässt.

Zwischen der Innenwand 4 und dem radial äußeren Ende eines jeden Stabes 16 ist ein kleiner Abstand 17 ausgebildet. Dieser Abstand liegt üblicherweise in der Größenordnung von 1 bis 2mm. Er hängt aber von dem pulverförmigen Gut und der mit dem pulverförmigen Gut zu mischenden Flüssigkeit ab. Bei diesem Mischen kann sich beispielsweise eine Art Teig ergeben, der an der Innenwand 4 anhaftet, wobei sich eine Dicke des Teiges ausbildet, die größer als der Abstand 17 ist. Der Abstand 17 ist dann so eingestellt, dass der Teig sich austauscht. Bei dem kleinen Abstand 17 wird der Teig geschert und verarbeitet und löst sich dadurch von Innenwand 4 des Arbeitsraums 3 ab. Durch den geringen Abstand 17 wird eine Scherkraft erzeugt, die sich durch den Abstand 17 hindurch bis zur Innenwand 4 des Arbeitsraums 3 fortpflanzt, so dass der gesamte Teig geknetet wird.

In manchen Fällen soll kein Teig entstehen, sondern es soll lediglich das pulverförmige Gut befeuchtet werden. In derartigen Fällen kann es günstig sein, den Abstand anders zu wählen.

Die Stäbe 16 sind, wenn man ihre Reihenfolge parallel zur Richtung der Achse 10 betrachtet, in Umfangsrichtung "chaotisch" oder unregelmäßig versetzt gegeneinander angeordnet. Damit vermeidet man, dass ein Stab im "Windschatten" eines anderen Stabes bewegt wird und eine Tropfnase an einem Stab die Ausbildung des Gemisches aus pulverförmigem Gut und Flüssigkeit am folgenden Stab behindert. Das pulverförmige Gut und die Flüssigkeit werden sich zwar hauptsächlich radial außen ansammeln. Auch dort kann sich dann aber am in Umfangsrichtung oder Rotationsrichtung nachlaufenden Ende des Stabes eine Tropfnase bilden, die dann den in Axialrichtung nächst höheren oder nächst niedrigeren Stab, d.h. einen Stab, der weiter weg oder näher dran am Auslass 12 ist, behindern. Man kann beispielsweise diese chaotische Anordnung so definieren, dass benachbarte Stäbe 16 in Umfangsrichtung jeweils einen Winkelabstand zwischen sich aufweisen, wobei sich ein erster Winkelabstand von einem benachbarten zweiten Winkelabstand unterscheidet. Der erste Winkelabstand kann beispielsweise positiv unter der zweite Winkelabstand kann beispielsweise negativ sein. Der Absolutbetrag der beiden Winkelabstände muss dabei nicht gleich sein.

Wie man in Fig. 1 und 2 erkennen kann, sind die Stäbe 16 ausschließlich auf der von der Speiseöffnung 11 abgewandten Seite des Flügelkranzes 7 angeordnet.

Wie oben erwähnt, ist am unteren Ende des Gehäuses 2 der Auslass 12 angeordnet.

Ein dem Auslass benachbarter Stab 16a weist eine Unterkante 18 auf, die mit dem Auslass 12, genauer gesagt einer Unterkante 19 des Gehäuses 2, fluchtet. Der "unterste Stab" 16a bearbeitet also das an der Innenwand 4 anhaftende pulverförmige Gut, das bereits mit der Flüssigkeit gemischt ist, bis zum unteren Ende des Gehäuses 2. Auch an dem Auslass 12 kann sich dann kein Ring aus dem Teig oder aus dem Gemisch von pulverförmigem Gut und Flüssigkeit ausbilden.

An den Auslass 12 schließt sich ein Auslassabschnitt 20 an. Der Auslassabschnitt 20 weist gegenüber dem Auslass 12 einen radialen Rücksprung 21 nach außen auf. Dieser Rücksprung 21 entspricht mindestens der Dicke einer Wand des Gehäuses 2, die den Arbeitsraum 3 umgibt. Das vom untersten Stab 16a von der Innenwand 4 abgeförderte Gemisch aus pulverförmigem Gut und Flüssigkeit wird, wenn es in Schwerkraftrichtung nach unten wandert, an diesen Rücksprung 21 radial nach außen ausweichen. Der Rücksprung 21 bildet eine Fläche, die senkrecht zur Schwerkraftrichtung ausgerichtet ist. Dort ist die Anhaftkraft für das Gemisch kleiner, so dass das Gemisch mehr oder weniger von selbst in Schwerkraftrichtung nach unten fällt oder rutscht.

Der Auslassabschnitt 20 kann aus einem elastischen Material gebildet sein, beispielsweise durch einen Schlauch 22 aus einem elastischen Kunststoff. Wenn sich eine größere Menge des Gemischs unterhalb des Auslasses 19 in dem Auslassabschnitt 20 ansammelt, dann führt dies dazu, dass sich der Auslassabschnitt 20 nach außen wölbt, so dass die Innenseite 23 des Auslassabschnitts 20 wiederum eine Flächenkomponente erhält, die senkrecht zur Schwerkraftrichtung ist, so dass sich das Gemisch leicht von der Innenseite 23 lösen kann.

Alternativ oder zusätzlich kann man auch vorsehen, dass der Auslassabschnitt 20 sich in radiale Richtung vom Auslass 12 weg aufweitet. Auch dadurch wird ein Anhaften des Gemisches an der Innenwand 23 des Auslassabschnitts nur bis zu einer gewissen Grenze möglich. Sobald das Gemisch eine kritische Masse überschreitet, ist das Gewicht des Gemisches so groß, dass es in Schwerkraftrichtung nach unten rutscht oder fällt.

Zusätzlich und alternativ kann man auch vorsehen, dass der Auslassabschnitt 20 zumindest an seiner Innenseite 23 eine Antihaft-Oberfläche aufweist. Die Antihaft-Oberfläche kann durch das Material des Auslassabschnitts 20 selbst gebildet sein. Die Antihaft-Oberfläche kann aber auch durch eine Beschichtung gebildet sein.

Der Rotor 5 dreht sich mit mehreren 100 Umdrehungen pro Minute, bevorzugterweise mit 1000 bis 1500 Umdrehungen pro Minute, so dass sich eine Verweilzeit des pulverförmigen Guts, das im Laufe des Prozesses mit Flüssigkeit gemischt wird, von 20 bis 30 Sekunden ergibt.

Die Vorrichtung 1 arbeitet wie folgt:
Pulverförmiges Gut, das durch die Speiseöffnung 11 zugeführt wird, fällt unter der Wirkung der Schwerkraft auf den Flügelkranz 7, genauer gesagt auf die dort rotierenden Flügel 8. Ein Teil des pulverförmigen Guts kann zwar durch die Lücken 9 zwischen den Flügeln 8 treten. Aufgrund der relativ hohen Rotationsgeschwindigkeit des Rotors 5 wird jedoch ein Großteil des pulverförmigen Gutes auf den Flügeln auftreffen. Beim Auftreffen auf die Flügel 8 wird das pulverförmige Gut mit Zentrifugalkraft beaufschlagt und radial nach außen gefördert, bis es an der Innenwand 4 des Arbeitsraums 3 zur Anlage kommt. Unter der Wirkung der Schwerkraft rutscht eine Schicht aus dem pulverförmigen Gut an der Innenwand 4 dann nach unten.

Diese Schicht aus dem pulverförmigen Gut wird dann durch aus dem Ringspalt 13 austretender Flüssigkeit benetzt. Bei diesem Benetzen wird diese Schicht durch die Stäbe 16 beaufschlagt. Die Schicht ist dicker als der Abstand 17 der Schicht. Die Stäbe 16 führen dann eine Art Knetoperation durch, was zu einer innigen Durchmischung der Flüssigkeit und des pulverförmigen Gutes führt. Da sich die Stäbe 16 in axiale Richtung überlappen oder zumindest in axialer Richtung aneinander anschließen, kann an der Innenwand 4 des Arbeitsraums 3 kein Ring der Schicht verbleiben, der das weitere Absinken der Schicht behindern würde. Insgesamt wandert dann also der "Teig" oder die Mischung aus dem pulverförmigen Gut und der Flüssigkeit durch die Wirkung der Schwerkraft nach unten bis zum Auslass 12.

Auch am Auslass 12 wird die Schicht durch den untersten Stab 16a beaufschlagt und von der Innenwand 4 abgestreift. Durch die spezielle Ausbildung des Auslassabschnitts 20, wie oben geschildert, kann auch hier kein Stau entstehen.

Mit der Vorrichtung 1 kann man beispielsweise Mehl und Wasser mischen, um einen Teig herzustellen.

Man kann aber auch andere pulverförmige Güter mit anderen Flüssigkeiten mischen. So kann man beispielsweise einen Kakaopulver staubfrei machen, indem man das Kakaopulver mit einem Fett, beispielsweise Öl, mischt. Durch das Mischen von Kakaopulver mit dem Fett ergeben sich relativ große Agglomerate oder diese Agglomerate können sich ergeben. Diese Agglomerate werden dann durch die rotierenden Stäbe 16 wieder in kleinere und kleinste Agglomerate zerlegt. Mit den Stäben 16 und deren Anordnung kann man die Größe der Agglomerate definieren.

Eine weitere Anwendungsmöglichkeit wäre die Herstellung von Brausepulver. Hier wird Puderzucker mit Wasser und Geschmacksstoffen gemischt. Auch hier ergeben sich dann Agglomerate, die man nachfolgend auf einem Trocknerabschnitt trocknen kann, wo das Wasser verdunstet wird. Das Brausepulver wird dadurch stabilisiert.

Wenn man Fett als Flüssigkeit verwendet, benötigt man im Grunde nur einen beheizten Rotor und/oder ein beheiztes Gehäuse. Die hierfür notwendige Heizeinrichtung oder die hierfür notwenigen Heizeinrichtungen sind in der Zeichnung aus Gründen der Übersicht nicht dargestellt.

## Patentansprüche

1. Vorrichtung (1) zum Mischen eines pulverförmigen Guts mit einer Flüssigkeit, wobei die Vorrichtung (1) ein Gehäuse (2) aufweist, in dem ein Arbeitsraum (3) mit einer Innenwand (4) angeordnet ist, wobei in dem Arbeitsraum (3) ein drehbar angetriebener Rotor (5) angeordnet ist, der einen Flügelkranz (7) und in Richtung auf die Innenwand (4) weisende und in Umfangsrichtung des Rotors (5) an unterschiedlichen Positionen angeordnete Stäbe (16) aufweist, wobei oberhalb des Flügelkranzes (7) eine Speiseöffnung (11) für das pulverförmige Gut und unterhalb des Flügelkranzes (7) ein mit einer Flüssigkeitsversorgungsanordnung verbindbarer Ringspalt (13) angeordnet ist, **dadurch gekennzeichnet, dass** die Stäbe (16) parallel zur Axialrichtung des Rotors (5) aneinander anschließen oder einander überlappen, wobei sich eine lückenlose Anordnung der Stäbe (16) in Axialrichtung ergibt.

2. Vorrichtung nach Anspruch 1, **dadurch gekennzeichnet, dass** in Axialrichtung benachbarte Stäbe (16) in Umfangsrichtung jeweils einen Winkelabstand zwischen sich aufweisen, wobei sich ein erster Winkelabstand von einem benachbarten zweiten Winkelabstand unterscheidet.

3. Vorrichtung nach Anspruch 2, **dadurch gekennzeichnet, dass** ein erster Winkelabstand positiv und ein zweiter Winkelabstand negativ ist.

4. Vorrichtung nach einem der Ansprüche 1 bis 3, **dadurch gekennzeichnet, dass** Stäbe (16) ausschließlich auf der von der Speiseöffnung (11) abgewandten Seite des Flügelkranzes (7) angeordnet sind.

5. Vorrichtung nach Anspruch 4, **dadurch gekennzeichnet, dass** die Stäbe (16) in Axialrichtung beidseits des Ringspalts (13) angeordnet sind.

6. Vorrichtung nach einem der Ansprüche 1 bis 5, **dadurch gekennzeichnet, dass** zwischen dem radial äußeren Ende der Stäbe (16) und der Innenwand (4) ein kleiner Abstand (17) ausgebildet ist.

7. Vorrichtung nach einem der Ansprüche 1 bis 6, **dadurch gekennzeichnet, dass** der Flügelkranz (7) Flügel (8) aufweist, die zumindest an ihrer radialen Außenseite einen Winkel im Bereich von 2° bis 8° mit der Umfangsrichtung einschließen.

8. Vorrichtung nach Anspruch 7, **dadurch gekennzeichnet, dass** die Flügel (8) eine Verwindung um eine von radial innen nach radial außen verlaufende Achse aufweisen.

9. Vorrichtung nach einem der Ansprüche 1 bis 8, **dadurch gekennzeichnet, dass** das Gehäuse (2)am unteren Ende des Arbeitsraums (3) einen Auslass (12) aufweist, wobei eine dem Auslass (20) benachbarte Unterkante (18) eines dem Auslass benachbarter Stabes (16a) mit der Unterkante (19) des Arbeitsraumes (3) fluchtet, und ein Auslassabschnitt (20) anschließt an den Auslass (12) anschließt.

10. Vorrichtung nach Anspruch 9, **dadurch gekennzeichnet, dass** der Auslassabschnitt (20) gegenüber dem Auslass (12) einen radialen Rücksprung (21) nach außen aufweist.

11. Vorrichtung nach Anspruch 10, **dadurch gekennzeichnet, dass** der radiale Rücksprung (21) mindestens der Dicke einer Wand des Gehäuses (2) entspricht, die den Arbeitsraum (3) umgibt.

12. Vorrichtung nach einem der Ansprüche 9 bis 11, **dadurch gekennzeichnet, dass** der Auslassabschnitt (20) aus einem elastischen Material gebildet ist.

13. Vorrichtung nach einem der Ansprüche 9 bis 12, **dadurch gekennzeichnet, dass** sich der Auslassabschnitt (20) vom Auslass (12) weg auf weitet.

14. Vorrichtung nach einem der Ansprüche 9 bis 13, **dadurch gekennzeichnet, dass** der Auslassabschnitt (20) eine Antihaft-Oberfläche aufweist.

15. Vorrichtung nach einem der Ansprüche 1 bis 14, **dadurch gekennzeichnet, dass** das Gehäuse (2) und/oder der Rotor (5) eine Heizeinrichtung aufweisen.

## Claims

1. Device (1) for mixing a powdery material with a liquid, wherein the device (1) comprises a housing (2) in which a working chamber (3) having an inner wall (4) is arranged, wherein in the working chamber (3) a rotatably driven rotor (5) is arranged which comprises a blade ring (7) and bars (16) which point in the direction of the inner wall (4) and are arranged at different positions at a circumferential direction of the rotor, wherein a feed opening (11) for the powdery material is arranged above the blade ring (7) and an annular gap (13) connectable to a liquid supply arrangement is arranged below the blade ring (7), **characterized in that** the bars (16) adjoin or overlap one another parallel to the axial direction of the rotor (5), wherein a gap-free arrangement of the bars (16) in the axial direction results.

2. Device according to claim 1, **characterized in that** the bars (16) adjacent in the axial direction comprise in a circumferential direction respectively an angular distance between one another, wherein a first angular distance differs from an adjacent, second angular distance.

3. Device according to claim 2, **characterized in that** a first angular distance is positive and a second angular distance is negative.

4. Device according to any one of claims 1 to 3, **characterized in that** the bars (16) are arranged solely on the side of the blade ring (7) facing away from the feed opening (11).

5. Device according to claim 4, **characterized in that** the bars (16) are arranged on both sides of the annular gap (13) in an axial direction.

6. Device according to one of claims 1 to 5, **characterized in that** a small distance (17) is formed between the radial outer end of the bars (16) and the inner wall (4).

7. Device according to any of claims 1 to 6, **characterized in that** the blade ring (7) comprises blades (8) that have, at least at their radial outside, an angle to the circumferential direction in the range of 2° to 8°.

8. Device according to claim 7, **characterized in that** the blades (8) comprise a twist about an axis extending from the radial inside to the radial outside.

9. Device according to any of claims 1 to 8, **characterized in that** the housing (2) has an outlet (12) at the bottom end of the working chamber (3), wherein a bottom edge (18), which is adjacent to the outlet (20), of a bar (16a) adjacent to the outlet is flush with the bottom edge (19) of the working chamber (3), and an outlet section (20) adjoines the outlet (12).

10. Device according to claim 9, **characterized in that** the outlet section (20) comprises a radial recess (21) in an outward direction across from the outlet (12).

11. Device according to claim 10, **characterized in that** the radial recess (21) corresponds at least to the thickness of a wall of the housing (2) surrounding the working chamber (3).

12. Device according to any of claims 9 to 11, **characterized in that** the outlet section (20) is formed from an elastic material.

13. Device according to any of claims 9 to 12, **characterized in that** the outlet section (20) widens away from the outlet.

14. Device according to any of claims 9 to 13, **characterized in that** the outlet section (20) comprises a non-stick surface.

15. Device according to any of claims 1 to 14, **characterized in that** the housing (2) and/or the rotor (5) comprise a heating device.

## Revendications

1. Dispositif (1), destiné à mélanger un produit pulvérulent avec un liquide, le dispositif (1) comportant un carter (2) dans lequel est placé un espace de travail (3) doté d'une paroi interne (4), dans l'espace de travail (3) étant placé un rotor (5) entraîné en rotation, qui comporte une couronne à pales (7) et des barres (16) montrant en direction de la paroi interne (4) et placées en différentes positions dans la direction périphérique du rotor (5), au-dessus de la couronne à pales (7) étant placée une ouverture d'alimentation (11) pour le produit pulvérulent et en-dessous de la couronne à pales (7) une fente annulaire (13) susceptible d'être assemblée avec un agencement d'amenage du liquide, **caractérisé en ce que** les barres (16) se raccordent les unes aux autres ou se chevauchent à la parallèle de la direction axiale du rotor (5), un agencement ininterrompu des barres (16) résultant dans la direction axiale.

2. Dispositif selon la revendication 1, **caractérisé en ce que** des barres (16) voisines dans la direction axiale présentent entre elles respectivement dans la direction périphérique un écart angulaire, un premier écart angulaire se différenciant d'un deuxième écart angulaire voisin.

3. Dispositif selon la revendication 2, **caractérisé en ce qu'**un premier écart angulaire est positif et un deuxième écart angulaire est négatif.

4. Dispositif selon l'une quelconque des revendications 1 à 3, **caractérisé en ce que** des barres (16) sont placées exclusivement sur le côté de la couronne à pales (7) qui est opposé à l'ouverture d'alimentation (11) .

5. Dispositif selon la revendication 4, **caractérisé en ce que** les barres (16) sont placées de part et d'autre de la fente annulaire (13) dans la direction axiale.

6. Dispositif selon l'une quelconque des revendications 1 à 5, **caractérisé en ce qu'**entre l'extrémité la plus à l'extérieur en direction radiale des barres (16) et la paroi interne (4) est réalisé un petit écart (17).

7. Dispositif selon l'une quelconque des revendications 1 à 6, **caractérisé en ce que** la couronne à pales (7) comporte des pales (8), qui au moins sur leur face extérieure radiale incluent un angle de l'ordre de 2° à 8° avec la direction périphérique.

8. Dispositif selon la revendication 7, **caractérisé en ce que** les pales (8) comportent un vrillage autour d'un axe s'écoulant de l'intérieur en direction radiale vers l'extérieur en direction radiale.

9. Dispositif selon l'une quelconque des revendications 1 à 8, **caractérisé en ce que** le carter (2) comporte sur l'extrémité inférieure de l'espace de travail (3) une sortie (12), une arête inférieure (18) voisine de la sortie (20) d'une barre (16a) voisine de la sortie étant alignée sur l'arête inférieure (19) de l'espace de travail (3) et un segment de la sortie (20) se raccordant sur la sortie (12).

10. Dispositif selon la revendication 9, **caractérisé en ce que** le segment de sortie (20) comporte un retrait (21) radial vers l'extérieur par rapport à la sortie (12).

11. Dispositif selon la revendication 10, **caractérisé en ce que** le retrait (21) radial correspond au moins à l'épaisseur d'une paroi du carter (2) qui entoure l'espace de travail (3).

12. Dispositif selon l'une quelconque des revendications 9 à 11, **caractérisé en ce que** le segment de sortie (20) est formé d'une matière élastique.

13. Dispositif selon l'une quelconque des revendications 9 à 12, **caractérisé en ce que** le segment de sortie (20) s'évase en s'éloignant de la sortie (12).

14. Dispositif selon l'une quelconque des revendications 9 à 13, **caractérisé en ce que** le segment de sortie (20) comporte une surface antiadhésive.

15. Dispositif selon l'une quelconque des revendications 1 à 14, **caractérisé en ce que** le carter (2) et/ou le rotor (5) comportent un système de chauffage.
